# EUROPÄISCHE PATENTSCHRIFT

(11) **EP 1 858 659 B1**
(45) Veröffentlichungstag und Bekanntmachung des Hinweises auf die Patenterteilung: **12.09.2012**
(21) Anmeldenummer: 06708076.2
(22) Anmeldetag: 07.02.2006
(51) Int. Cl.: B21J 15/32, B23P 19/00

(54) **VERFAHREN UND VORRICHTUNG ZUM ZUFÜHREN VON VERBINDUNGSELEMENTEN ZU EINEM VERARBEITUNGSGERÄT**
METHOD AND DEVICE FOR FEEDING CONNECTING ELEMENTS TO A MANUFACTURING DEVICE
PROCEDE ET DISPOSITIF D'ACHEMINEMENT D'ELEMENTS DE CONNEXION VERS UN APPAREIL DE TRAITEMENT

(30) Priorität: 14.02.2005 DE 102005006795
(43) Veröffentlichungstag der Anmeldung: 28.11.2007
(73) Patentinhaber: Newfrey LLC, Newark, Delaware 19711 (US)
(72) Erfinder: REITER, Christian, 35398 Giessen (DE)
(74) Vertreter: Haar, Lucas Heinz Jörn
(86) Internationale Anmeldenummer: PCT/EP2006/050729
(87) Internationale Veröffentlichungsnummer: WO 2006/084847

(56) Entgegenhaltungen:
- EP-A- 0 511 093
- DE-U1- 29 902 398
- US-A- 2 330 052

## Beschreibung

Die Erfindung betrifft ein Verfahren gemäβ Oberbegriff des Anspruchs 1 zum Zuführen von Verbindungselementen mit wenigstens zwei parallelen Begrenzungsflächen zu einem Verarbeitungsgerät, bei welchem die Verbindungselemente von einem Zuführgerät in gleicher Ausrichtung aufgereiht bereitgestellt und durch einen Förderkanal zu einer an dem Verarbeitungsgerät angeordneten Ladevorrichtung gefördert werden. Die Erfindung betrifft ferner eine Vorrichtung gamäβ Oberbegriff des Anspruchs 5 zum Zuführen von Verbindungselementen zu einem Verarbeitungsgerät mit einem Zuführgerät, zur gleichgerichteten Bereitstellung der Verbindungselemente, einer an dem Verarbeitungsgerät angeordneten Ladevorrichtung, einem das Zuführgerät mit der Ladevorrichtung verbindenden Förderkanal und einem der Ladevorrichtung zugeordneten Magazin zur Aufnahme einer Mehrzahl von gleichgerichtet, hintereinander aufgereihten Verbindungselementen.

Aus EP 0 922 538 B1 ist ein Verfahren bekannt, bei welchem ein Verbindungselement in Form eines Stanznietes mit einem Kopf und einem von dem Kopf abgesetzten Schaft von einem Zuführgerät durch einen Förderkanal einer an dem Stanznietgerät angeordneten Ladevorrichtung zugeführt wird. Der Förderkanal weist hierbei einen T-förmigen Querschnitt auf, der im wesentlichen der Projektionsfläche des Stanznietes entspricht. Die Stanzniete werden hierbei dem Förderkanal mit quer zur Förderrichtung ausgerichteter Längsachse zugeführt und mit Hilfe von Luft einzeln durch den Förderkanal zu der Ladevorrichtung transportiert. In der Ladevorrichtung wird der zugeführte Stanzniet abgebremst und mit Hilfe von beweglichen Positioniersegmenten und einem Sperrelement in einer für den Verarbeitungsprozeß geeigneten Ausgangsposition gehalten. Dieses bekannte Verfahren und die hierzu aus dem genannten Dokument bekannten Vorrichtungen haben sich in der Praxis bewährt. Bei schnellen Arbeitszyklen und anwendungsbedingt längeren Übertragungswegen erweist sich jedoch die Zeitdauer für die Einzelzuführung der Verbindungselemente als nachteilig. Zudem kann es bei ungünstiger Formgestalt des Nietes zu erhöhtem Verschleiß an den Wänden des Förderkanals kommen.

Bei einem aus EP 0 511 093 B1 bekannten Verfahren zur Konditionierung und Abgabe von zylindrischen Kleinteilen, wie Schrauben oder Niete werden die Kleinteile in der gleichen Richtung mit dem Schaft nach vorne in einer Säule in einem zylindrischen Ve-sorgungsrohr angeordnet, das oberhalb mit einer Öffnung zur Versorgung mit Teilen und mit einem Drucklufteingang und unterhalb mit einem Ausgang versehen ist, der einem Organ zur stoßweisen Abgabe der Teile zugeordnet ist. Das zylindrische Rohr ist ringförmig in mehreren Windungen im Inneren eines starren Behälters angeordnet und bildet ein Magazin, in dem eine große Zahl von Teilen bevorratet ist. Der innendurchmesser des Rohres ist in einem bestimmten Verhältnis größer als der größte Durchmesser der Teile, so daß ein Luftstrom durch den die Teile in Richtung des Ausgangs vorgetrieben werden entlang des Rohres an den Teilen vorbei bis zum Ausgangsende strömen kann. Dieses bekannte Verfahren hat den Nachteil, daß es in der Nähe des Verarbeitungsgerätes einen vergleichsweise großen Bauraum benötigt. Weiterhin ist der Energiebedarf zum Transport der Teile relativ groß, da bei jeder Abgabe eines Teiles die ganze Säule aus vielen Teilen bewegt werden muß. Ein kurzzeitiger Wechsel zwischen Teilen unterschiedlicher Länge ist ebenfalls nicht ohne weiteres möglich.

Aus DE 299 02 398 U1 ist eine Vorrichtung gemäß dem Oberbegriff des Anspruchs 5 bekannt, welche das Verfahren gemäß dem Oberbegriff des Anspruchs 1 anwendet. Die Vorrichtung dient zum Einbringen von Verbindungselementen in Werkstücke und weist einen Vorrichtungskopf mit einem durch eine Betätigungseinrichtung bewegbaren Stößel, eine Zuführung zum Zuführen der Verbindungselemente und ein Ladeelement mit einer Aufnahme auf. Das Ladeelement ist durch einen Hubzylinder zwischen einer Ladeposition, in der die Aufnahme zum Einbringen eines Verbindungselements bereit steht, und einer Arbeitsposition bewegbar, in der die Aufnahme sich zwischen dem Stößel und einem Stößelkanal befindet. Die Verbindungselemente werden hierbei der Vorrichtung jeweils einzeln von einer Versorgungseinheit durch Einschießen mit Druckluft über einen Zuführschlauch zugeführt, der an eine starre Zuführung mit einem an der Ladeposition endenden Kanal angeschlossen ist Bei dieser Vorrichtung wird jeweils ein Verbindungselement in die Aufnahme eingeschossen, wenn sich das Ladeelement in der Ladeposition befindet. Das Einschießen des nächsten Verbindungselements kann erst erfolgen, wenn nach erfolgtem Arbeitshub des Ladeelements und des Stößels das Ladeelement in die Ladeposition zurückgekehrt ist.

Der Erfindung liegt die Aufgabe zugrunde, ein Verfahren der eingangs genannten Art anzugeben, welches kurze Zuführzeiten ermöglicht, sich durch geringen Energiebedarf auszeichnet und zu einem geringen Verschleiß des Förderkanals beiträgt. Es ist weiterhin Aufgabe der Erfindung, eine zur Durchführung des Verfahrens geeignete Vorrichtung zu schaffen.

Erfindungsgemäß wird diese Aufgabe durch das in Anspruch 1 angegebene Verfahren bzw. die in Anspruch 5 angegebene Vorrichtung gelöst. Vorteilhafte Ausgestaltungen des Verfahrens und der Vorrichtung sind in den auf diese Ansprüche jeweils zurückbezogenen Unteransprüche angegeben.

Bei dem Verfahren nach der Erfindung erfolgt die Förderung der Verbindungselemente in einzelnen Förderschritten, die einen zeitlichen Abstand voneinander haben, wobei bei jedem Förderschritt eine Säule aus mehreren Verbindungselementen, die gleichgerichtet mit ihren parallelen Begrenzungsflächen aneinander liegen, durch Einleiten von Luft in den Förderkanal von dem Zuführgerät zur Ladevorrichtung am Verarbeitungsgerät gefördert wird und die der Ladevorrichtung zugeführte Säule aus Verbindungselementen in einem Magazin der Ladevorrichtung aufgenommen wird und die Verbindungselemente von der Ladeverrichtung einzeln dem Magazin entnommen und in Abhängigkeit von dem Verarbeitungszyklus dem Verarbeitungsgerät zugeführt werden.

Das erfindungsgemäße Verfahren ermöglicht kurze Förderzeiten zwischen dem Zuführgerät und der Ladevorrichtung, da bei jedem Förderschritt mehrere Verbindungselemente gefördert werden. Durch die Wahl des zeitlichen Abstands der Förderschritte und der Anzahl der Verbindungselemente je Förderschritt kann die Fördergeschwindigkeit in einem großen Umfang variiert werden. Das erfindungsgemäße Verfahren ermöglicht ferner einen vergleichsweise geringen Bedarf an Energie in Form von Druckluft, da Luftmenge und Druck für einen mehrere Verbindungselemente umfassenden Förderschritt nicht wesentlich größer ist als für einen Förderschritt zum Fördern eines einzelnen Verbindungselementes, wobei die Zahl der Förderschritte im Vergleich zur Einzelförderung jedoch um ein Vielfaches kleiner ist.

Überraschenderweise hat sich weiterhin gezeigt, daß das erfindungsgemäße Verfahren zu einer erheblichen Verminderung des Verschleißes im Förderkanal beiträgt und auch eine störungsfreie Förderung von Verbindungselementen mit ungünstigem Verhältnis von Durchmesser zur Länge ermöglicht. Dies ist darauf zurückzuführen, daß sich die einzeinen Verbindungselemente in der Säule mit ihren parallelen Begrenzungsflächen aneinander abstützen und dadurch in ihrer Lage stabilisiert werden. Selbst wenn es sich bei den Verbindungselementen um Stanzniete handelt, die an einem Ende eine scharfe Schneidkante haben, können diese nach dem erfindungsgemäßen Verfahren mit der Schneidkante voraus gefördert werden, ohne daß dies zu einem nennenswert höheren Verschleiß an den Wänden des Förderkanals führt.

Nach einem weiteren Vorschlag der Erfindung ist vorgesehen, daß die Förderung der Verbindungselemente durch den Förderkanal zum Magazin der Ladevorrichtung erfolgt vorzugsweise in Abhängigkeit vom Verarbeitungszyklus oder vom Füllstand im Magazin. Ein Sensor oder ein Zähler erfaßt, wenn eine Mindestmenge an Verbindungselementen im Magazin unterschritten wird, und löst dadurch einer Steuervorgang aus, durch den die Förderung einer neuen Säule aus Verbindungselementen zum Magazin bewirkt wird.

Eine zur Durchführung des Verfahrens geeignete Vorrichtung nach der Erfindung umfaßt ein Zuführgerät durch das Verbindungselemente in gleichsinniger Ausrichtung bereitgestellt werden, einen das Zuführgerät mit einer an einem Verarbeitungsgerät angeordneten Ladevorrichtung verbindenden Förderkanal und ein der Ladevorrichtung zugeordnetes Magazin zur Aufnahme einer durch den Förderkanal zugeführten Säule aus einer Mehrzahl von gleichgerichtet mit parallelen Begrenzungsflächen aneinander liegenden Verbindungselementen, wobei die Ladevorrichtung einen sich an ein Ausgabeende des Magazins anschließende Ladekanal aufweist, der sich quer zur Längsachse des Magazins erstreckt und in einen Arbeitskanal des Verarbeitungsgerätes mündet und wobei dem Ladekanal eine Fördereinrichtung zugeordnet ist, und der Ladekanal so ausgebildet ist, dass jeweils ein einzelnes Verbindungselement aus dem Magazin in den Ladekanal austritt und in den Arbeitskanal des Verarbeitungsgerätes gefördert wird.

Die erfindungsgemäße Vorrichtung zeichnet sich durch einen einfachen Aufbau und eine zuverlässige Arbeitsweise aus. Durch die Gestaltung der Ladevorrichtung mit einem quer zur Längsachse des Magazins angeordneten Ladekanal ergibt sich eine kompakte Bauweise der Ladevorrichtung und eine vorteilhafte Anordnung des Magazins und des Förderkanals mit kleiner Störkontur in der Nähe des Arbeitsbereichs des Verarbeitungsgerätes. Vor allem bei der Zuführung von Stanznieten zu einem Nietgerät ergeben sich günstige Raumformen für die Ladevorrichtung mit Magazin, wenn die Stanzniete mit der Schneidkante voran dem Magazin zugeführt werden. In der Ladevorrichtung können die Stanzniete dann quer zu ihrer Rotationsachse von dem Magazin zum Arbeitskanal des Stanznietgerätes transportiert werden, wodurch eine zuverlässig arbeitende Zuführung der einzelnen Stanzniete zum Nietgerät gewährleistet ist.

Nach einem weiteren Vorschlag der Erfindung weist die Fördereinrichtung der Ladevorrichtung einen Ladeschieber auf, der mit Hilfe eines pneumatisch angetriebenen Kolbens in dem Ladekanal hin und her bewegbar ist. Der Verschiebeweg des Ladeschiebers erstreckt sich nach einem weiteren Vorschlag der Erfindung nur über einen Teil der Länge des Ladekanals, wobei zur Förderung der Verbindungselemente auf dem nicht vom Ladeschieber bestrichenen Abschnitt des Ladekanals eine pneumatische Fördereinrichtung vorgesehen ist, die durch den Ladeschieber aktiviert wird. Diese Ausgestaltung ermöglicht einen kurzen Hub des Ladeschiebers und damit eine kompakte Bauweise der Ladevorrichtung. Des weiteren wird eine Kollision des Ladeschiebers mit in den Arbeitskanal einfahrenden Werkzeugen des Verarbeitungsgerätes vermieden.

In einer vorteilhaften Ausgestaltung ist zur Bewegung des Ladeschiebers ein pneumatischer Arbeitszylinder mit zweiseitig beaufschlagbarem Kolben vorgesehen, dessen Kolbenstange mit dem Ladeschieber verbunden ist. Zur Bildung der pneumatischen Fördereinrichtung sind der Kolben, die Kolbenstange und der Ladeschieber in Längsrichtung von einer Kanalbohrung durchsetzt, die mit einer Arbeitskammer des pneumatischen Arbeitszylinders in Verbindung steht, wenn sich der Ladeschieber in einer in Richtung auf den Arbeitskanal vorgeschobenen Position befindet. Zur Steuerung der pneumatischen Fördereinrichtung ist in dem Arbeitszylinder eine Ventilnadel angeordnet, die in einer ersten Stellung des Kolbens in das kolbenseitige Ende der Kanalbohrung hineinragt und diese dadurch verschließt und die in einer zweiten Stellung des Kolbens aus der Kanalbohrung heraustritt, wodurch die Kanalbohrung mit der Arbeitskammer verbunden wird.

Die Erfindung wird nachfolgend anhand eines Ausführungsbeispiels näher erläutert, das in der Zeichnung dargestellt ist. Es zeigen
- Figur 1: ein Nietgerät mit einer Vorrichtung zum Zuführen von Stanznieten,
- Figur 2: einen Abschnitt eines Förderkanals mit einer Säule aus aneinander liegenden Stanznieten,
- Figur 3: eine Ladevorrichtung zum Transportieren einzelner Stanznieten aus einem Magazin in den Arbeitskanal eines Nietgerätes.

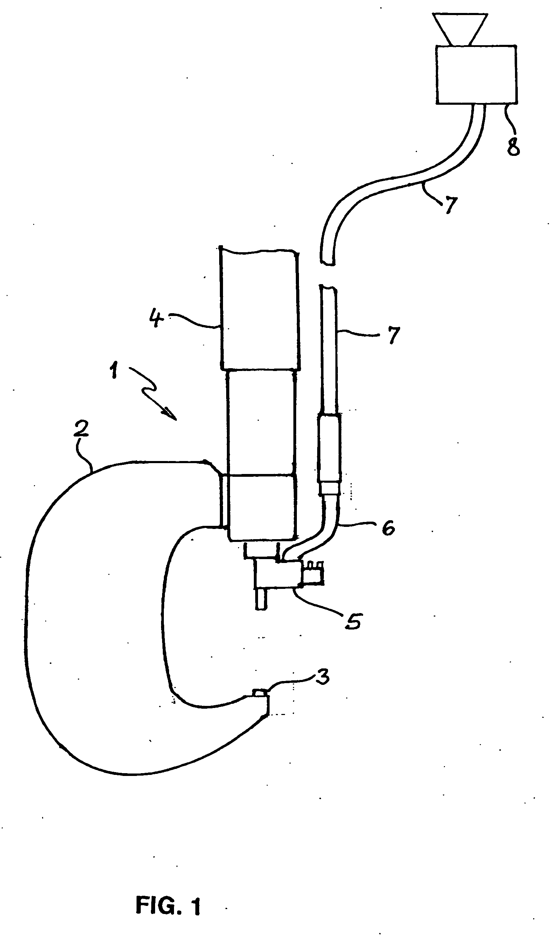

Figur 1 zeigt ein Nietgerät 1, das zum Verarbeiten von Stanznieten bestimmt ist. Stanzniete dienen zum Verbinden von Bauteilen aus Blech. Sie werden durch einen Stempel mit großer Kraft von einer Seite in die aufeinander liegenden Bleche gedrückt, wobei sich die Bleche an einer ein Widerlager bildenden Matrize abstützen. Das Nietgerät 1 weist hierzu einen C-förmigen Bügel 2 auf, der an einem Ende eine Matrize 3 und an dem gegenüberliegenden Ende ein Gehäuse 4 trägt, indem ein gegen die Matrize 3 bewegbarer Stempel und eine Vorrichtung zum Antreiben des Stempels angeordnet sind. Zum Zuführen der Stanzniete befindet sich an dem Nietgerät 1 eine Ladevorrichtung 5 mit einem Magazin 6, welchem über einen Förderkanal 7 von einem Zuführgerät 8 bereit gestellte Stanzniete zugeführt werden. Der Förderkanal 7 besteht aus einem nachgiebigen Rohr aus Kunststoff und muß in manchen Anwendungsfällen eine Entfernung von mehreren Metern zwischen dem Zuführgerät 8 und dem Nietgerät 1 überbrücken.

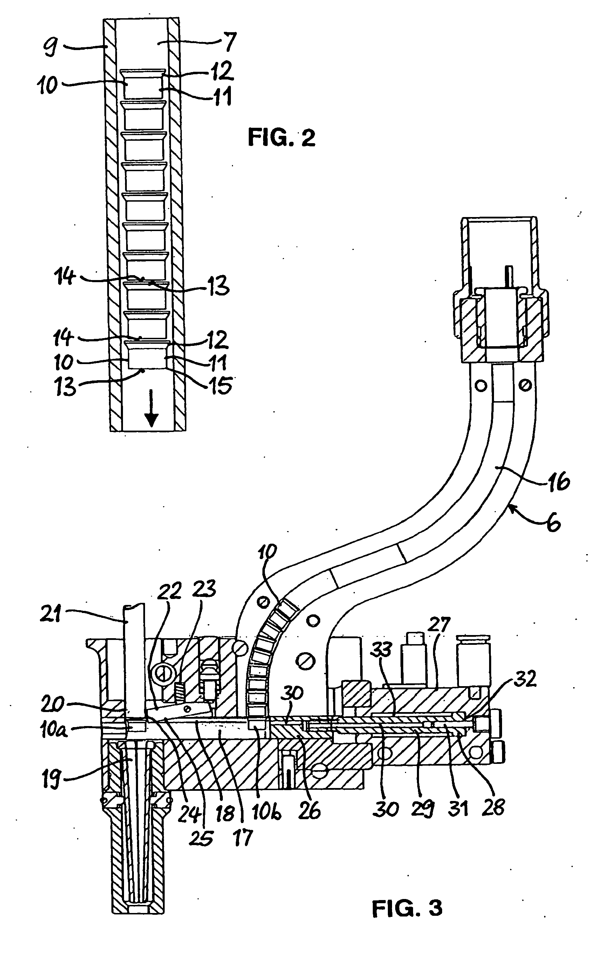

In Figur 2 ist ein Längsschnitt durch einen Abschnitt des Förderkanals 7 dargestellt. Die Wand 9 des Förderkanals 7 hat einen kreisringförmigen Querschnitt und umschließt einen je nach Verlauf des Förderkanals 7 teils zylindrischen, teils torusabschnittförmigen Hohlraum. In dem Förderkanal 7 befindet sich in Figur 2 eine Säule aus einzelnen Stanznieten 10. Die Stanzniete 10 haben eine rotationssymmetrische Form, die sich im wesentlichen aus einem zylindrischen Fußabschnitt 11 und einem kegelstumpfförmigen Kopfabschnitt 12 zusammensetzt. Die axialen Enden der Stanzniete 10 werden durch parallele Kreisflächen 13, 14 begrenzt. Die Kreisfläche 13 bildet mit der Mantelfläche des Fußabschnitts 11 eine Schneidkante 15. Der größte Außendurchmesser der Stanzniete 10 befindet sich am Kopfabschnitt 12 und ist etwas kleiner als der Innendurchmesser des Förderkanals 7, damit die Stanzniete 10 ohne zu Klemmen und ohne großen Widerstand durch den Führungskanal 7 gleiten können.

Wie aus Figur 2 zu ersehen haben die Stanzniete 10 ein ungünstiges Schlankheitsverhältnis, da ihr Durchmesser größer ist als ihre axiale Dicke. Würden die Stanzniete 10 ihre in Figur 2 dargestellte koaxiale Lage innerhalb des Förderkanals 7 nicht beibehalten und sich drehen, so könnten sie sich in dem Förderkanal 7 verklemmen und den Weitertransport zur Ladevorrichtung 5 blockieren. Nach der Erfindung wird dies dadurch vermieden, daß aus einer Anzahl von Stanznieten 10 für den Transport durch den Förderkanal 7 eine Säule gebildet wird, in der die einzelnen Stanzniete 10 jeweils mit ihren Kreisflächen 13, 14 aneinander liegen. Das hintere Ende der Säule wird dann mit in den Förderkanal 7 eingeleiteter Druckluft beaufschlagt, welche die Säule durch den Förderkanal 7 bis in das nach Art eines Endabschnitts des Förderkanals 7 gestaltete Magazin 6 treibt. Durch die auf das hintere Ende der Säule einwirkende Vortriebskraft und die auf das vordere Ende der Säule einwirkende Druckkraft hervorgerufen durch die sich der Verdrängung durch eine am magazinseitigen Ende des Förderkanals befindliche Drosselöffnung widersetzenden Luft, die sich vor der Säule in dem Förderkanal befindet, werden die Stanzniete 10 der Säule gegeneinander gedrückt und dadurch daran gehindert, eine das Hindurchgleiten durch den Förderkanal beeinträchtigende Lage einzunehmen. Daher gleiten die Stanznieten 10 geführt durch den Rand ihrer Kopfabschnitte 12 an der Wand 9 des Förderkanals 7 entlang, ohne daß ihre Schneidkante 15 die Wand 9 nennenswert berühren und beschädigen können.

Aus dem Förderkanal 7 gelangen die Stanzniete 10 Säule für Säule in das Magazin 6. Das Magazin 6 hat wie aus Figur 3 zu ersehen einen S-förmigen Magazinkanal 16, der sich an den Förderkanal 7 anschließt und im wesentlichen den gleichen Durchmesser wie der Förderkanal 7 hat. Das Magazin 6 ist mit der Ladevorrichtung 5 fest verbunden und der Magazinkanal 16 mündet im rechten Winkel in einen Ladekanal 17 der Ladevorrichtung 5. Im Gegensatz zu dem runden Querschnitt des Magazinkanals 16 hat der Ladekanal 17 einen rechteckigen Querschnitt, dessen Breite dem Durchmesser des Fußabschnitts 11 der Stanzniete 10 entspricht. Der obere Rand des Ladekanals 17 ist in Anpassung an die Kegelstumpfform des Kopfabschnitts 12 der Stanzniete 10 beidseitig schräg nach außen erweitert, so daß der Kopfabschnitt 12 darin aufgenommen und gehalten werden kann. Der Ladekanal 17 erstreckt sich von der Mündung des Magazinkanals 16 bis zu einem Arbeitskanal 19, der rechtwinklig vom Boden des Ladekanals 17 abzweigt. Gegenüber dem Arbeitskanal 19 mündet in den Ladekanal 17 eine Bohrung 20, in der sich ein in den Arbeitskanal 19 hinein bewegbarer Stempel 21 befindet. Unmittelbar neben der Bohrung 20 ragt von oben in den Ladekanal 17 eine Sperrklinke 22 hinein, die derart drehbar lagert und an einer Feder 23 abgestützt ist, daß sie entgegen der Kraft der Feder 23 aus dem Ladekanal 17 heraus schwenkbar ist. Die Sperrklinke 22 weist eine der Bohrung 20 zugekehrte Sperrfläche 24 und auf der entgegengesetzten Seite eine Rampenfläche 25 auf, die zur Längsachse des Ladekanals geneigt ist und sich, in Richtung der Mündung des Magazinkanals 16 gesehen, von dem Boden des Ladekanals 17 entfernt.

Neben der Mündung des Magazinkanals 16 befindet sich in dem Ladekanal 17 ein Ladeschieber 26, der in den Ladekanal 17 hinein bewegbar ist. Zum Bewegen des Ladeschiebers 26 ist ein pneumatischer Arbeitszylinder 27 mit einem zweiseitig beaufschlagbaren Kolben 28 und einer Kolbenstange 29 vorgesehen. Die Kolbenstange 29 ist mit dem Ladeschieber 26 fest verbunden. Durch den Kolben 28, die Kolbenstange 29 und den Ladeschieber 26 erstreckt sich eine Kanalbohrung 30. In das kolbenseitige Ende der Kanalbohrung 30 ragt eine an dem Zylindergehäuse befestigte Ventilnadel 31 hinein, die die Kanalbohrung 30 verschließt. In der Zeichnung nicht dargestellte Anschlußbohrungen verbinden Arbeitskammern 32, 33, die sich auf beiden Seiten des Kolbens 28 befinden, mit einer pneumatischen Ventilvorrichtung zur Steuerung der Bewegung des Ladeschiebers 26.

Figur 3 zeigt die Ladevorrichtung 5 in einer Betriebslage, in der der Ladeschieber 26 nach einem Ladevorgang in seine Ausgangsstellung zurückgekehrt ist, wobei sich der geladene Stanzniet 10a noch vor der Mündung des Arbeitskanals 19 befindet und in dieser Stellung durch die seitlichen Wände des Ladekanals 17 und die Sperrklinke 22 gehalten wird. Zum Setzen des Stanzniets 10a wird der Stempel 21 durch Ansteuern des Nietgeräts 1 nach unten bewegt, wobei die seitlichen Wände des Ladekanals 17 etwas auseinander fahren, damit der dickere Kopfabschnitt des Stanzniets 10a den engeren Bereich des Ladekanals 17 passieren kann. Der Stempel 21 drückt dann den Stanzniet 10a durch den Ladekanal 19, der sich hierbei federnd erweitert und dadurch den Stanzniet 10a reibschlüssig führt, auf die auf der Matrize aufliegenden Werkstücke und preßt ihn in diese hinein. Anschließend kehrt der Stempel 21 in die dargestellt Ausgangslage zurück, so daß der nächste Stanzniet 10b geladen werden kann.

Wie die Zeichnung zeigt, befindet sich der Stanzniet 10b bereits im hinteren Ende des Ladekanals 17 vor dem Ladeschieber 26. In diese Stellung ist der Stanzniet 10b durch Schwerkraft und in den Magazinkanal 16 eingeleitete Blasluft gelangt, die auch bei Überkopfanordnung des Nietgeräts 1 die Säule aus Stanznieten 10 in Richtung des Ladekanals 17 drückt. Um den Stanzniet 10b in die Arbeitsposition zwischen dem Stempel 21 und dem Arbeitskanal 19 zu bringen, wird die Arbeitskammer 32 des Arbeitszylinders 27 mit Druckluft beaufschlagt und die Arbeitskammer 33 mit der Atmosphäre verbunden. Hier durch bewegt der Kolben 28 den Arbeitsschieber 26 in den Ladekanal 17 hinein, wobei dieser den Stanzniet 10 b vor sich herschiebt und gleichzeitig den Ausgang des Magazinkanals 16 verschließt. Bevor der Kolben 28 seine Endstellung am Boden der Arbeitskammer 33 erreicht, tritt die Ventilnadel 31 aus der Kanalbohrung 30 heraus, so daß die der Arbeitskammer 32 zugeführte Druckluft durch die Kanalbohrung 30 strömt und an der Stirnfläche des Ladeschiebers 26 austritt. Der austretende Luftstrahl trifft auf den Stanzniet 10b und treibt diesen unter der nach oben ausweichenden Sperrklinke 22 in die Endposition unter dem Stempel 21, wo er durch die Sperrfläche 25 der in die Ausgangslage zurückgesprungenen Sperrklinke 22 festgehalten wird. Sobald der Kolben 28 und mit ihm der Ladeschieber 26 ihre ausgefahrene Endposition erreicht haben, wird die Druckbeaufschlagung des Kolbens 28 umgekehrt, so daß dieser durch die in die Kammer 33 eingeleitete Druckluft zusammen mit dem Ladeschieber 26 in die Ausgangsstellung zurückbewegt wird. Sobald der Ladeschieber 26 den Ausgang des Magazinkanals 16 freigegeben hat, bewegt sich die Säule aus Stanznieten 10 in Richtung des Ladekanals 17 bis der vorderste Stanzniet die Position des Stanzniets 10 b erreicht hat, in der er mit seinem Kopfabschnitt am oberen Rand des Ladekanals abgestützt ist.

Durch die beschriebene Gestaltung und Arbeitsweise der Ladevorrichtung 5 wird eine zuverlässige Förderung der Stanzniete in den Arbeitskanal des Nietgeräts erreicht. Ein Drehen der Niete ist nicht erforderlich. Durch die Kombination der mechanischen Förderung mit Hilfe des Ladeschiebers und der sich daran anschließenden pneumatischen Förderung des Stanzniets bis in seine Arbeitsposition wird eine kompakte Bauweise der Ladevorrichtung ermöglicht. Das Zusammenwirken von mechanischer und pneumatischer Förderung wird auf einfache Weise wegabhängig gesteuert und bedarf daher keiner zusätzlichen Kontrolle. Die beschriebene Gestaltung der Vorrichtung hat weiterhin den Vorteil, daß Stanzniete unterschiedlicher Länge zugeführt werden können, ohne daß Änderungen an der Vorrichtung vorgenommen werden müssen. Die säulenweise Förderung der Niete in das an der Ladevorrichtung angeordnete Magazin ermöglicht eine hohe Arbeitsgeschwindigkeit des Nietgeräts und sorgt für einen niedrigen Druckluftbedarf.

## Patentansprüche

1. Verfahren zum Zuführen von Verbindungselementen (10) mit wenigstens zwei parallelen Begrenzungsflächen (13, 14) zu einem Verarbeitungsgerät (1), bei welchem die Verbindungselemente (10) von einem Zuführgerät (8) in gleicher Ausrichtung aufgereiht bereitgestellt und durch einen Förderkanal (7) zu einer an dem Verarbeitungsgerät (1) angeordneten Ladevorrichtung (5) gefördert werden, wobei die Förderung der Verbindungselemente (10) in einzeinen Förderschritten erfolgt, die einen zeitlichen Abstand voneinander haben, **dadurch gekennzeichnet daß** bei jedem Förderschritt eine Säule aus mehreren Verbindungselementen (10), die gleichgerichtet mit ihren parallelen Begrenzungsflächen (13, 14) aneinander liegen, durch Einleiten von Luft in den Förderkanal (7) von dem Zuführgerät (8) zur Ladevorrichtung (5) am Verarbeitungsgerät (1) gefördert wird und daß die der Ladevorrichtung (5) zugeführte Säule aus Verbindungselementen (10) in einem Magazin (6) der Ladevorrichtung aufgenommen wird und die Verbindungselemente (10) von der Ladevorrichtung (5) einzeln dem Magazin (6) entnommen und in Abhängigkeit von dem Verarbeitungszyklus dem Verarbeidungsgerät (1) zugeführt werden.

2. Verfahren nach Anspruch 1, dadurch gekennzeichnel, daß die Förderung der Verbindungselemente (10) durch den Förderkanal (7) zum Magazin (6) der Ladevorrichtung (5) in Abhängigkeit vom Verarbeilungszyklus oder vom Fülistand im Magazin (6) erfolgt.

3. Verfahren nach einem der vorhergehenden Ansprüche, **dadurch gekennzeichnet, daß** die Förderung der einzelnen Verbindungselemente (10) vom Magazin (6) zum Verarbeitungsgerät (1) teils mechanisch und teils pneumatisch erfolgt.

4. Verfahren nach einem der vorhergehenden Ansprüche, **dadurch gekennzeichnet, daß** die Anzahl der Verbindungselemente (10) je geförderter Säule und/oder der zeitliche Abstand der Säulenförderzyklen zur Anpassung an die Arbeitsgeschwindigkeit des Verarbeitungsgeräts (1) einstellbar sind.

5. Vorrichtung zum Zuführen von Verbindungselementen (10) mit wenigstens zwei parallelen Begrenzungsflächen (13, 14) zu einem Verarbeitungsgerät (1) umfassend ein Zuführgerät (8), durch das Verbindungselemente (10) in gleichsinniger Ausrichtung bereitgestellt werden, einen das Zuführgerät (8) mit einer an einem Verarbeitungsgerät (1) angeordneten Ladevorrichtung (5) verbindenden Förderkanal (7), wobei die Ladevorrichtung (5) einen Ladekanal (17) aufweist, der in einen Arbeitskanal (19) des Verarbeitungsgerätes (1) mündet und wobei dem Ladekanal (17) eine Fördereinrichtung zugeordnet ist, durch die jeweils ein einzelnes Verbindungselement (10) zu dem Arbeitskanal (19) des Verarbeitungsgerätes (1) gefördert wird, **gekennzeichnet durch** ein der Ladevorrichtung (5) zugeordnetes Magazin (6) zur Aufnahme einer durch den Förderkanal zugeführten Säule aus einer Mehrzahl von gleichgerichtet mit den parallelen Begrenzungsflächen (13, 14) aneinander liegenden Verbindungselementen (10), wobei der Ladekanal (17) sich an das Ausgabeende des Magazins (6) anschließt, sich quer zur Längsachse des Magazins (6) erstreckt und so ausgebildet ist, dass jeweils ein einzelnes Verbindungselement (10) aus dem Magazin in den Ladekanal (17) austritt und zu dem Arbeitskanal (19) des Verarbeitungsgerätes (1) gefördert wird.

6. Vorrichtung nach dem vorhergehenden Anspruch, **dadurch gekennzeichnet, daß** die Ladevorrichtung (5) einen Ladeschieber (26) aufweist, der mit Hilfe eines pneumatisch angetriebenen Kolbens (28) in dem Ladekanal (17) hin und her bewegbar ist.

7. Vorrichtung nach einem der Ansprüche 5 oder 6, **dadurch gekennzeichnet, daß** der Verschiebeweg des Ladeschiebers (26) sich nur über einen Teil der Länge des Ladekanals (17) erstreckt, wobei zur Förderung der Verbindungselemente (10) auf dem nicht vom Ladeschieber (26) bestrichenen Abschnitt des Ladekanals (17) eine pneumatische Fördereinrichtung vorgesehen ist, die durch die Bewegung des Ladeschiebers (26) aktiviert wird.

8. Vorrichtung nach einem der Ansprüche 5 bis 7, **dadurch gekennzeichnet, daß** ein pneumatischer Arbeitszylinder (27) mit zweiseitig beaufschlagbarem Kolben (28) vorgesehen ist, dessen Kolbenstange (29) mit dem Ladeschieber (26) verbunden ist, wobei die Kolbenstange (29) und der Ladeschieber (26) in Längsrichtung von einer Kanalbohrung durchsetzt sind, die mit einer Arbeitskammer (32) des pneumatischen Arbeitszylinders (27) in Verbindung steht, wenn sich der Ladeschieber (26) in einer in Richtung auf den Arbeitskanal (19) vorgeschobenen Position befindet.

9. Vorrichtung nach einem der Ansprüche 5 bis 8, **dadurch gekennzeichnet, daß** zur Steuerung der pneumatischen Förderung in dem Arbeitszylinder (27) eine Ventilnadel (31) angeordnet ist, die in einer ersten Stellung des Kolbens (28) in das kolbenseitige Ende der Kanalbohrung (30) hineinragt und diese dadurch verschließt und die in einer zweiten Stellung des Kolbens (28) aus der Kanalbohrung (30) heraustritt, wodurch die Kanalbohrung (30) mit der Arbeitskammer (32) verbunden wird.

10. Vorrichtung nach einem der Ansprüche 5 bis 9, **dadurch gekennzeichnet, daß** ein Sensor oder ein Zähler vorgesehen ist, durch den die Unterschreitung einer Mindestmenge an Verbindungselementen (10) im Magazin (6) erfaßt und ein Steuervorgang ausgelöst wird, der die Förderung einer neuen Säule aus Verbindungselementen (10) zum Magazin (6) bewirkt.

## Claims

1. Method for feeding connecting elements (10) with at least two parallel boundary surfaces (13, 14) to a processing device (1), wherein the connecting elements (10) are placed in readiness, lined up in the same orientation, by a feeder and are conveyed through a conveying duct (7) to a loading device arranged on the processing device (1), wherein the connecting elements (10) are conveyed in individual conveying steps which are separated from one another in time, **characterized in that** at each conveying step a column of multiple connecting elements (10) in the same orientation, with their parallel boundary surfaces (13, 14) resting on one another, is conveyed by the feeder (8) to the loading device (5) on the processing device (1) through the introduction of air into the conveying duct (7) and that the column of connecting elements (10) fed to the loading device (5) is accommodated in a magazine of the loading device, and the connecting elements (10) are removed individually from the magazine (6) by the loading device (5) and fed to the processing device (1) as a function of the processing cycle.

2. Method according to claim 1, **characterized in that** the connecting elements (10) are conveyed through the conveying duct (7) to the magazine (6) of the loading device as a function of the processing cycle or of the fill level in the magazine (6).

3. Method according to one of the preceding claims, **characterized in that** conveyance of the individual connecting elements (10) from the magazine (6) to the processing device (1) is accomplished partly mechanically and partly pneumatically.

4. Method according to one of the preceding claims, **characterized in that** the number of connecting elements (10) per conveyed column and/or the time interval between the column conveying cycles can be adjusted in order to adapt to the operating speed of the processing device (10).

5. Apparatus for feeding connecting elements (90) having at least two parallel boundary surfaces (13, 14) to a processing device (1) comprising a feeder (8) that places connecting elements (10) in readiness in a consistent orientation, a conveying duct (7) that connects the feeder (8) to a loading device (5) arranged on a processing device (1), wherein the loading device (5) has a loading duct (17) which terminates in a working duct (19) of the processing device (1), and wherein the loading duct (17) has associated with it a conveying mechanism which conveys individual connecting elements (10) into the working duct (19) of the processing device (1) one at a time, **characterized by** a magazine (6) associated with the loading device (5) for accommodating a column of multiple connecting elements (10) delivered through the conveying duct in the same orientation, with their parallel boundary surfaces (13, 14) resting on one another, wherein the loading duct (17) adjoins the output end of the magazine (6), extends perpendicular to the longitudinal axis of the magazine (6) and is designed in such a way that individual connecting elements (10) emerge from the magazine into the loading duct (17) and can be conveyed to the working duct (19) of the processing device (1) one at a time.

6. Apparatus according to the preceding claim, **characterized in that** the loading device (5) has a loading slide (26) that can be moved back and forth in the loading duct (17) with the aid of a pneumatically driven piston (28).

7. Apparatus according to one of claims 5 or 6, **characterized in that** the loading slide's (26) path of motion extends over only part of the length of the loading duct (17), wherein a pneumatic conveying mechanism activated by the movement of the loading slide (26) is provided to convey the connecting elements (10) on the section of loading duct (17) not traversed by the loading slide (26).

8. Apparatus according to one of claims 5 - 7, **characterized in that** a pneumatic working cylinder (27) with a double-acting piston (28) whose piston rod (29) is connected to the loading slide (26) is provided, wherein the piston rod (29) and the loading slide (26) are traversed lengthwise by a passage that communicates with a working chamber (32) of the pneumatic working cylinder (27) when the loading slide (26) is in a position advanced toward the working duct (19).

9. Apparatus according to one of claims 5 - 8, **characterized in that**, in order to control the pneumatic conveying mechanism, a valve needle (31) is arranged in the working cylinder (27), and in a first position of the piston (28), the needle projects into the piston end of the passage (30), thus closing it, and in a second position of the piston (28), the needle withdraws from the passage (30), causing the passage (30) to be connected to the working chamber (32).

10. Apparatus according to one of claims 6 - 10, **characterized in that** a sensor or a counter is provided that detects when the quantity of connecting elements (10) in the magazine (6) falls below a minimum level, thereby triggering a control process which brings about the conveyance of a new column of connecting elements (10) to the magazine (6).

## Revendications

1. Procédé pour amener des éléments de liaison (10) avec au moins deux surfaces de limitation parallèles (13, 14) jusqu'à un appareil de traitement (1), dans lequel les éléments de liaison (10) sont mis à disposition par un appareil d'alimentation (8) en étant rangés dans le même alignement et sont transportés à travers un canal de transport (7) jusqu'à un dispositif de chargement (5) agencé contre l'appareil de traitement (1), dans lequel le transport des éléments de liaison (10) est effectué par des étapes de transport individuels qui présentent un intervalle de temps entre eux, **caractérisé en ce qu'**à chaque étape de transport, une colonne de plusieurs éléments de liaison (10) adjacents dans le même sens avec leurs surfaces de limitation parallèles (13, 14) est transportée par l'introduction d'air dans le canal de transport (7) de l'appareil d'alimentation (8) jusqu'au dispositif de chargement (5) contre l'appareil de traitement (1), et **en ce que** la colonne (10) d'éléments de liaison amenée au dispositif de chargement (5) est reçue dans un magasin (6) du dispositif de chargement, et les éléments de liaison (10) sont retirés individuellement du magasin (6) par le dispositif de chargement (5) et amenés à l'appareil de traitement (1) en fonction du cycle de traitement.

2. Procédé selon la revendication 1, **caractérisé en ce que** le transport des éléments de liaison (10) est effectué à travers le canal de transport (7) jusqu'au magasin (6) du dispositif de chargement (5) en fonction du cycle de traitement ou du niveau de remplissage dans le magasin (6).

3. Procédé selon l'une quelconque des revendications précédentes, **caractérisé en ce que** le transport des éléments de liaison (10) individuels du magasin (6) jusqu'à l'appareil de traitement (1) est effectué de manière en partie mécanique et en partie pneumatique.

4. Procédé selon l'une quelconque des revendications précédentes, **caractérisé en ce que** le nombre des éléments de liaison (10) pour chaque colonne transportée et/ou l'intervalle de temps des cycles de transport de colonne sont réglables pour s'adapter à la vitesse de fonctionnement de l'appareil de traitement (1).

5. Dispositif pour amener des éléments de liaison (10) avec au moins deux surfaces de limitation parallèles (13, 14) jusqu'à un appareil de traitement (1), comprenant un appareil d'alimentation (8) via lequel des éléments de liaison (10) alignés dans le même sens sont mis à disposition, un canal de transport (7) reliant l'appareil d'alimentation (8) à un dispositif de chargement (5) agencé contre un appareil de traitement (1), dans lequel le dispositif de chargement (5) présente un canal de chargement (17) débouchant sur un canal de travail (19) de l'appareil de traitement (1), et dans lequel un dispositif de transport est affecté au canal de chargement (17), via lequel dispositif de transport respectivement un seul élément de liaison (10) est transporté jusqu'au canal de travail (19) de l'appareil de traitement (1), **caractérisé par** un magasin (6) affecté au dispositif de chargement (5) pour recevoir une colonne amenée à travers le canal d'alimentation et composée d'une pluralité d'éléments de liaison (10) adjacents dans le même sens avec des surfaces de limitation parallèles (13, 14), dans lequel le canal de chargement (17) est consécutif à l'extrémité de sortie du magasin (6), s'étend transversalement par rapport à l'axe longitudinal du magasin (6) et est conçu de telle sorte que respectivement un seul élément de liaison (10) sort du magasin vers le canal de chargement (17) et est transporté jusqu'au canal de travail (19) de l'appareil de traitement (1).

6. Dispositif selon la revendication précédente, **caractérisé en ce que** le dispositif de chargement (5) présente un tiroir de chargement (26) qui peut être bougé dans les deux sens dans le canal de chargement (17) à l'aide d'un piston (28) à entraînement pneumatique.

7. Dispositif selon l'une quelconque des revendications 5 ou 6, **caractérisé en ce que** le trajet de déplacement du tiroir de chargement (26) s'étend uniquement sur une partie de la longueur du canal de chargement (17), dans lequel un dispositif de transport pneumatique est prévu pour le transport des éléments de liaison (10) sur la section du canal de chargement (17) non parcourue par le tiroir de chargement (26), le dispositif de transport étant activé par le mouvement du tiroir de chargement (26).

8. Dispositif selon l'une quelconque des revendications 5 à 7, **caractérisé en ce qu'**il est prévu un cylindre de travail (27) pneumatique avec un piston (28) pouvant être alimenté des deux côtés et dont la tige de piston (29) est reliée au tiroir de chargement (26), dans lequel la tige de piston (29) et le tiroir de chargement (26) sont traversés dans la direction longitudinale par un alésage de canal, l'alésage de canal communiquant avec une chambre de travail (32) du cylindre de travail (27) pneumatique lorsque le tiroir de chargement (26) se trouve dans une position avancée en direction du canal de travail (19).

9. Dispositif selon l'une quelconque des revendications 5 à 8, **caractérisé en ce que** pour commander le transport pneumatique, un pointeau de soupape (31) est agencé dans le cylindre de travail (27) qui, dans une première position du piston (28), s'introduit dans l'extrémité côté piston de l'alésage de canal (30) en refermant de ce fait ce dernier, et qui, dans une deuxième position du piston (28), sort de l'alésage de canal (30) de sorte que l'alésage de canal (30) est relié à la chambre de travail (32).

10. Dispositif selon l'une quelconque des revendications 5 à 9, **caractérisé en ce qu'**un capteur ou un compteur est prévu qui détecte le soupassement d'une quantité minimale d'éléments de liaison (10) dans le magasin (6) et **en ce qu'**est déclenché un processus de pilotage qui opère le transport d'une nouvelle colonne d'éléments de liaison (10) vers le magasin (6).
